# EUROPEAN PATENT APPLICATION

(11) **EP 1 079 568 A2**
(43) Date of publication of application: **28.02.2001**
(21) Application number: 00111841.3
(22) Date of filing: 07.06.2000
(51) Int. Cl.: H04L 12/44, H04L 29/02

(54) **Network topology change, system and method of changing**

(30) Priority: 24.08.1999 JP 23743599
(71) Applicant: MATSUSHITA ELECTRIC INDUSTRIAL CO., LTD., Kadoma-shi, Osaka 571-8501 (JP)
(72) Inventor: Sasaki, Yuhi, Yokohama-shi (JP); Shinohara, Toshiaki, Omiya-shi (JP); Tsuzuki, Kengo, Machida-shi (JP)
(74) Representative: Kügele, Bernhard

(57) **Abstract**

An automatic repeater/bridge changeover device (1) includes: port/portal units (P1, P2) each of which is connected to the IEEE1394 bus; physical layer processing units (2, 3) which are connected to the port/portal units, respectively; link layer processing units (4, 5) which are connected to the physical layer processing units, respectively; and an upper-level layer processing unit (6) which is connected to the link layer processing units. The automatic repeater/bridge changeover device also includes: a repeater fabric with switch (7) which is connected between the physical layer processing units; a bridge fabric with switch (8) which is connected between the physical layer processing units; and a controller (9) which performs the switching control over the switches of the repeater and bridge fabrics.

## Description

### BACKGROUND OF THE INVENTION

### Field of the Invention

The present invention relates to a bus connection changeover device which can automatically switch its internal connection according to network topology or traffic so that the device can be used as a repeater, a bridge or a leaf node.

### Description of the Related Art

Much attention has been focused a network using the IEEE1394 high-speed serial bus (which will be referred to as the "IEEE1394 bus", hereinafter), as a bus type network. The IEEE1394 bus has many features such as automatic setting of node IDs, hot plug and play, and an isochronous mode suitable for transmission of moving-image data, and has been adopted as a bus for transmitting digital image data.

In the bus type network, as a bus size (a distance between nodes or the maximum transmission delay) is increased, the band efficiency drops. A common method for solving this disadvantage is the micro-segmentation. The micro-segmentation means to divide the network into the small buses by devices such as bridges. In a conventional micro-segmentation, a network designer determines the segments according to the node position, the network topology, the traffic or the like.

In a general network, because of the address and delay problems, the topology and size of the bus, the number of the nodes, and the number of the hops are not completely free. When the network designer wants to expand the network by extending the network or adding new devices, he requires judging in advance whether or not a network configuration after the expansion is allowable. When the network configuration after the expansion is not allowable, it is necessary for the network designer to newly add devices such as bridges in order to avoid it.

Further, in the IEEE1394 bus, since only a tree type of bus topology is allowed, when a user wrongly forms a loop, this causes a problem that the network fails to operate normally. As a method for detecting the loop, there is a method for utilizing a timeout after the network is reset. However, this method has a problem that time during which the network cannot be used is prolonged.

In the IEEE1394 bus, since only the tree type of bus topology is allowed, there occurs a problem that, when a fault takes place in the node or the cable to interrupt the data transmission at the faulty location, the bus is cut off to interrupt the communication.

### SUMMARY OF THE INVENTION

The present invention is made in order to solve the above problems. An object of the present invention is to provide a network device which can be used as a repeater, a bridge or a leaf node having no internal connection.

Another object of the present invention is to provide a network device which can judge the conditions of the transmission delay on a network, the traffic, the connection state, the node port state, the network topology and so forth to automatically function as a repeater, a bridge or a leaf node.

The first bus connection changeover device according to the present invention comprises a plurality of bus connection units, and has an arrangement in which the device can switch a connection between any two ones of these bus connection units to be in a repeater connection state or in a non-connection state. With such an arrangement, when a network device is connected to a bus, the network device can be used as a repeater or a leaf node.

The second bus connection changeover device according to the present invention comprises a plurality of bus connection units, and has an arrangement in which the device can switch a connection between any two ones of these bus connection units to be in a repeater connection state or in a bridge connection state. With such an arrangement, when a network device is connected to a bus, the network device can be used as a repeater or a bridge.

The third bus connection changeover device according to the present invention comprises a plurality of bus connection units, and has an arrangement in which the device can switch a connection between any two ones of these bus connection units to be in a repeater connection state, in a bridge connection state or in a non-connection state. With such an arrangement, when a network device is connected to a bus, the network device can be used as a repeater, a bridge or a leaf node.

The fourth bus connection changeover device in accordance with the present invention has an arrangement in which the device monitors a network topology and traffic of a bus, and performs the switching operation in any one of the first to third bus connection changeover devices of the present invention according to the monitoring result. With such an arrangement, the fourth changeover device can judge the conditions of the transmission delay on a network, the traffic, the connection state, the node port state, the network topology and so forth so that a network device can be automatically used as a repeater, a bridge or a leaf node.

### BRIEF DESCRIPTION OF THE DRAWINGS

Fig. 1 is a block diagram showing the first exemplary arrangement of a bus connection changeover device according to an embodiment of the present invention;
Figs. 2A and 2B are diagrams showing the internal connection state of the bus connection changeover device of Fig. 1;
Fig. 3 is a block diagram of the second exemplary arrangement of the bus connection changeover device according to the embodiment of the present invention;
Figs. 4A and 4B are diagrams showing an example of the internal connection state of the bus connection changeover device of Fig. 3;
Figs. 5A and 5B are diagrams showing another example of the internal connection state of the bus connection changeover device of Fig. 3;
Fig. 6 is a diagram showing a configuration of a network when an automatic repeater/bridge changeover device of an embodiment of the present invention is used as a node;
Fig. 7 is a diagram for explaining the micro-segmentation of the network of Fig. 6;
Figs. 8A and 8B are diagrams for explaining how to avoid the restriction on the number of the nodes in the network when the automatic repeater/bridge changeover device of the embodiment of the present invention is used as the node;
Figs. 9A and 9B are diagrams for explaining how to avoid the restriction on the number of the pops in the network when the automatic repeater/bridge changeover device of the embodiment of the present invention is used as the node;
Fig. 10 is a diagram for explaining a loop connection in the network in which the automatic repeater/bridge changeover device of the embodiment of the present invention is used as the node;
Figs. 11A to 11D are diagrams for explaining how to avoid the bus restriction in the network in which the automatic repeater/bridge changeover device of the embodiment of the present invention is used as the node, as an example;
Figs. 12A to 12D are diagrams for explaining how to avoid the bus restriction in the network in which the automatic repeater/bridge changeover device of the embodiment of the present invention is used as the node, as another example;
Figs 13A to 13E are diagrams for explaining the redundancy in the network in which the automatic repeater/bridge changeover device of the embodiment of the present invention is used as the nodes; and
Figs. 14A to 14C are diagrams showing one example of the operation when a faculty occurs at a node in a network having a redundancy.

### DETAILED DESCRIPTION OF THE EMBODIMENTS

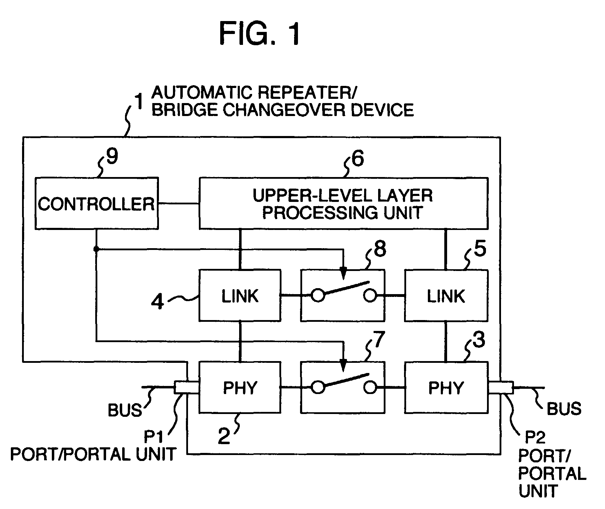

The present invention will be explained in detail in connection with embodiments of the present invention referring to Figs. 1-14.

### (First Exemplary Arrangement of Bus Connection Changeover Device)

Fig. 1 is a block diagram showing the first exemplary arrangement of a bus connection changeover device according to an embodiment of the present invention. This bus connection changeover device is an automatic repeater/bridge changeover device used to be connected to the IEEE1394 bus.

An automatic repeater/bridge changeover device 1 includes: port/portal units P1 and P2 each of which is connected to the IEEE1394 bus; physical layer processing units (PHY) 2 and 3 which are connected to the port/portal units P1 and P2, respectively; link layer processing units (LINK) 4 and 5 which are connected to the physical layer processing units 2 and 3, respectively; an upper-level layer processing unit 6 which is connected to the link layer processing units 4 and 5; a repeater fabric with switch 7 which is connected between the physical layer processing units 2 and 3; a bridge fabric with switch 8 which is connected between the link layer processing units 4 and 5; and a controller 9 for performing the switching controls of the repeater fabric with switch 7 and the bridge fabric with switch 8. For the sake of the convenience of explanation, the repeater fabric with switch 7 will be referred to merely as the "repeater fabric 7", and the bridge fabric with switch 8 will be referred to merely as the "bridge fabric 8", hereinafter. The repeater fabric 7 functions as a repeater fabric when the switch thereof is in ON state, and functions to cut off the connection between the physical layer processing units 2 and 3 when the switch is in OFF state. Further, the bridge fabric 8 functions as a bridge fabric when the switch thereof is in ON state, and functions to cut off the connection between the link layer processing units 4 and 5 when the switch is in OFF state.

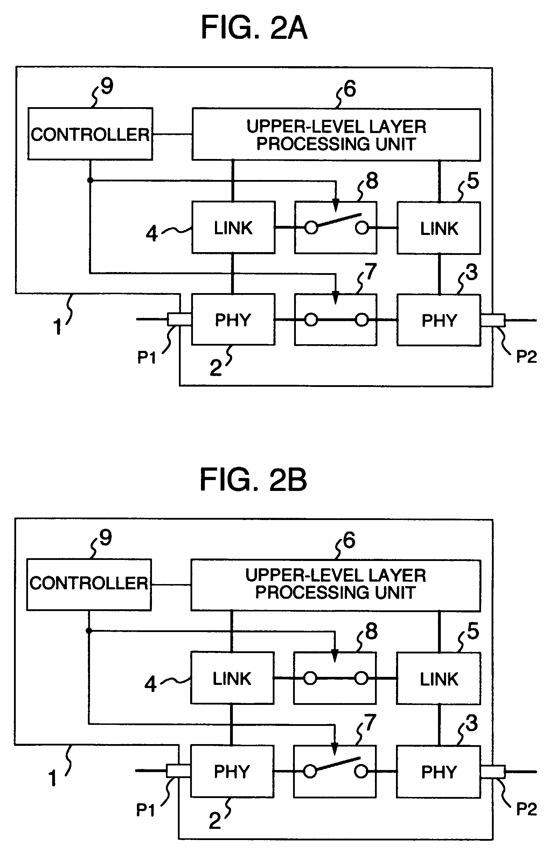

The automatic repeater/bridge changeover device 1 can be in three internal connection states according to ON/OFF states of the switches of the repeater fabric 7 and bridge fabric 8. The first connection state is a state shown in Fig. 1, that is, the switches of the repeater fabric 7 and bridge fabric 8 are in OFF state. In this connection state, the two port/portal units P1 and P2 of the automatic repeater/bridge changeover device 1 are not connected (this connection state will be referred to as a "non-connection state", hereinafter). The second connection state is a state in which the switch of the repeater fabric 7 is in ON state while the switch of the bridge fabric 8 is in OFF state, as shown in Fig. 2A. In this connection state, the two port/portal units P1 and P2 are connected through the physical layer processing units 2 and 3, so that the automatic repeater/bridge changeover device 1 functions as a repeater (this connection state will be referred to as a "repeater connection state", hereinafter). The third connection state is a state in which the switch of the repeater fabric 7 is in OFF state while the switch of the bridge fabric 8 is in ON state, as shown in Fig. 2B. In this connection state, the two port/portal units P1 and P2 are connected through the link layer processing units 4 and 5, so that the automatic repeater/bridge changeover device 1 functions as a bridge (which connection state will be referred to as a "bridge connection state", hereinafter).

When the bridge fabric 8 is removed from Fig. 1, it is possible to construct a changeover device which can be in the repeater connection state or in the non-connection state according to ON/OFF state of the switch of the repeater fabric 7. Further, when the switching control is carried out so that the switches of the repeater fabric 7 and bridge fabric 8 will not be simultaneously in OFF state, an automatic repeater/bridge changeover device without the non-connection state can be constructed.

### (Second Exemplary Arrangement of Bus Connection Changeover Device)

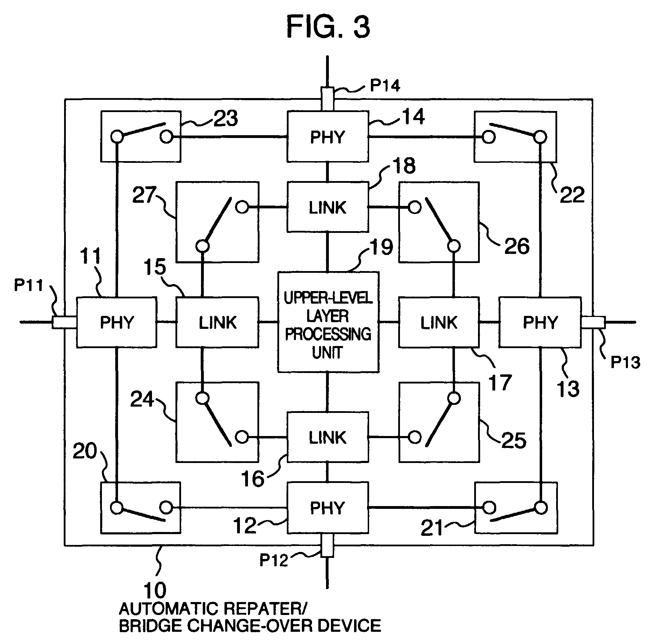

Fig. 3 is a block diagram showing the second exemplary arrangement of the bus connection changeover device according to the embodiment of the present invention. In this drawing, constituent units corresponding to the constituent units of Fig. 1 are denoted by the same names as those used in Fig. 1. This bus connection changeover device is also an automatic repeater/bridge changeover device used to be connected to the IEEE1394 bus.

An automatic repeater/bridge changeover device 10 includes: port/portal units P11-P14 each of which is connected to the IEEE1394 bus; physical layer processing units (PHY) 11-14 which are connected to the port/portal units P11-P14, respectively; link layer processing units (LINK) 15-18 which are connected to the physical layer processing units 11-14, respectively; an upper-level layer processing unit 19 which is connected to the link layer processing units 15-18; a repeater fabric with switch 20 which is connected between the physical layer processing units 11 and 12; a repeater fabric with switch 21 which is connected between the physical layer processing units 12 and 13; a repeater fabric with switch 22 which is connected between the physical layer processing units 13 and 14; a repeater fabric with switch 23 which is connected between the physical layer processing units 14 and 11; a bridge fabric with switch 24 which is connected between the link layer processing units 15 and 16; a bridge fabric with switch 25 which is connected between the link layer processing units 16 and 17; a bridge fabric with switch 26 which is connected between the link layer processing units 17 and 18; and a bridge fabric with switch 27 which is connected between the link layer processing units 18 and 15. For the sake of the convenience of explanation, the repeater fabrics with switch 20-23 will be referred to merely as the "repeater fabrics 20-23", and the bridge fabrics with switch 24-27 will be referred to merely as the "bridge fabrics 24-27", hereinafter. The repeater fabrics 20-23 and the bridge fabrics 24-27 have substantially the same functions as those of the repeater fabric 7 and bridge fabric 8 in Fig. 1, respectively. The automatic repeater/bridge changeover device 10, similarly to the automatic repeater/bridge changeover device 1 of Fig. 1, includes a controller for performing the switching control of the switches of the repeater fabrics 20-23 and bridge fabrics 24-27. However, the controller is not illustrated in Fig. 3 for simplicity of the drawing.

The automatic repeater/bridge changeover device 10 can be in many sorts of the internal connection states according to ON/OFF states of the switches of the repeater fabrics 20-23 and bridge fabrics 24-27. Three example of the internal connection states will be explained in the following.

In the first example, as shown in Fig. 3, the switches of the repeater fabrics 20-23 and bridge fabrics 24-27 are all in OFF state. In this state, similarly to the state shown in Fig. 1, there are no connections among the four port/portal units P11-P14. That is, this connection state is the non-connection state.

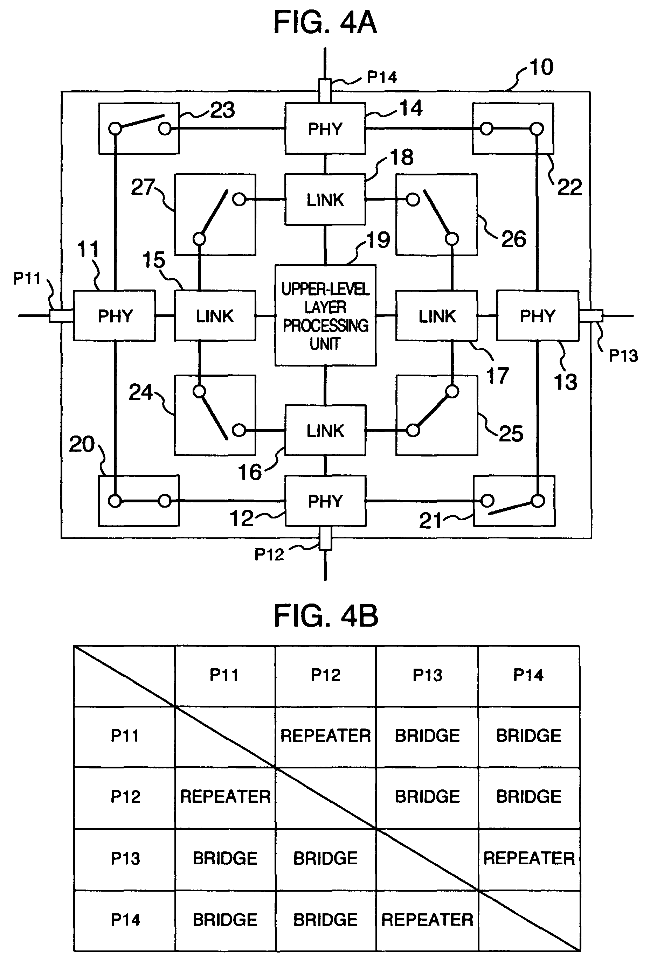

In the second example, as shown in Fig. 4A, the switches of the repeater fabrics 20 and 22 and bridge fabric 25 are in ON state, while the switches of the other fabrics 21, 23, 24, 26 and 27 are in OFF state. The internal connection relationship in this state is as shown in Fig. 4B. That is, when viewed from the port/portal unit P11, for example, the connections between the port/portal unit P11 and the port/portal units P12, P13 and P14 are the repeater connection, the bridge connection and the bridge connection, respectively.

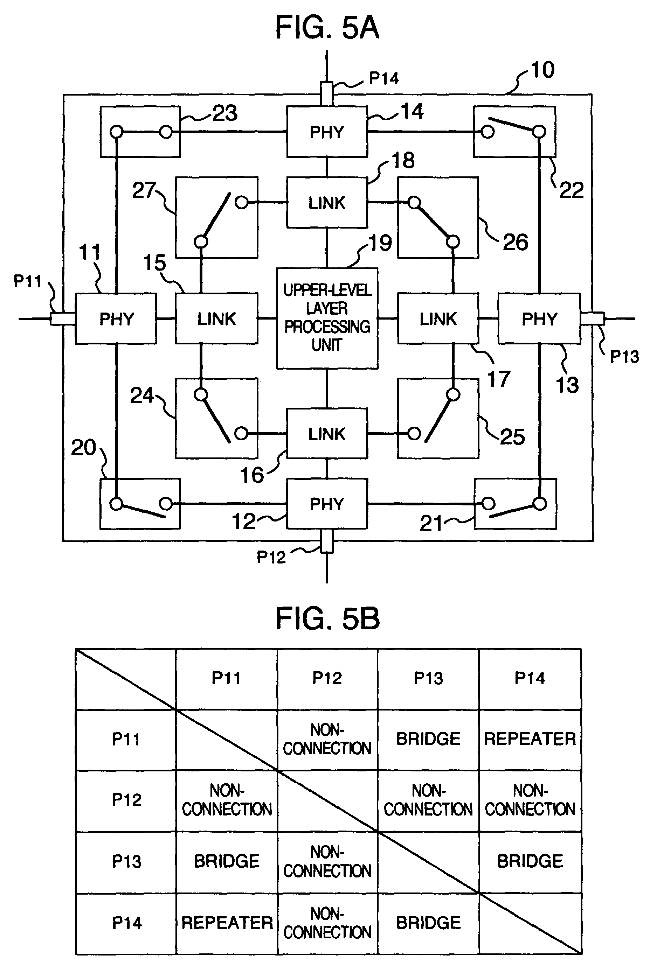

In the third example, as shown in Fig. 5A, the switches of the repeater fabric 23 and bridge fabric 26 are in ON state and the switches of the other fabrics 20-22, 24, 25 and 27 are in OFF state. The internal connection relationship in this state is as shown in Fig. 5B. That is, when viewed from the port/portal unit P11, the connections between the port/portal unit P11 and the port/portal units P12, P13 and P14 are the non-connection, the bridge connection and the repeater connection, respectively.

It is possible to realize more internal connection states by connecting two repeater fabrics with switch between the physical layer processing unit 11 and the physical layer processing unit13 and between the physical layer processing unit 12 and the physical layer processing unit14, and by connecting two bridge fabrics with switch between the link layer processing unit 15 and the link layer processing unit 17 and between the link layer processing unit 16 and the link layer processing unit 18.

### (Network Having Automatic Repeater/Bridge Changeover Device)

Explanation will be made as to a network having the aforementioned automatic repeater/bridge changeover device.

### (a) Improvement in Transmission Efficiency by Micro-Segmentation

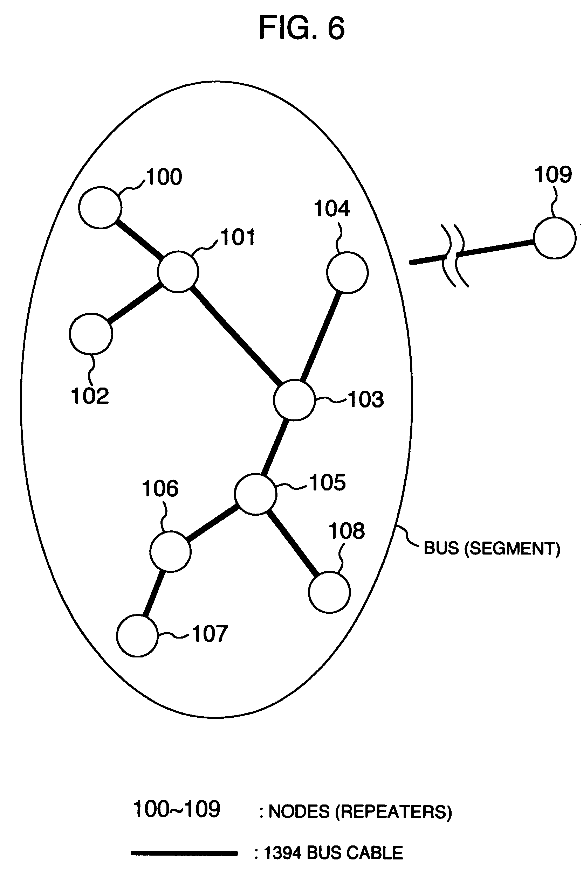

Fig. 6 shows a configuration of a network using the automatic repeater/bridge changeover devices shown in Fig. 1 or 3 as nodes. In the drawing, mark "○" denotes a node. It is assumed that the insides of the nodes 100-108 are repeater-connected, respectively. The nodes other than the node 109 are connected via the IEEE1394 bus cable.

The network having the nodes 100-108 forms a single segment. The segment means a range influenced by the transmission operation of a single node. A range connected to the physical layer by only the simple repeater (having no path limitation) is a single segment.

In the network mentioned above, for the purpose of improving the efficiency of the network, the following parts (1) to (3) are divided into segments by bridges.
(1) A part in which a large quantity of data are locally transmitted;
(2) A part having a different transmission rate;
(3) A part having a long distance between nodes.

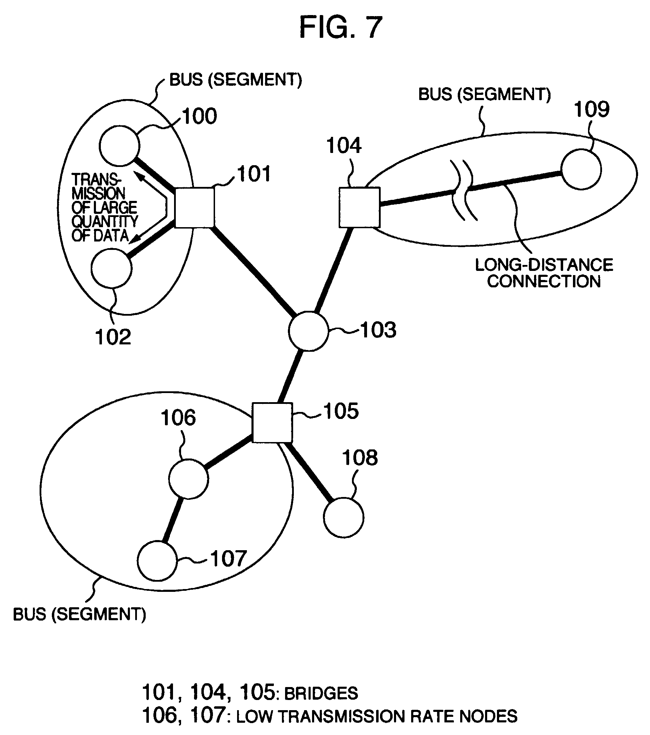

For example, in Fig. 6, in case a large quantity of data are transmitted between the node 100 and the node 102, a new segment consisting of the nodes 100-102 is formed by bridge-connecting the inside of the node 101 as shown in Fig. 7. Such segmentation can prevent the data transmission between the node 100 and the node 102 from consuming the band of the entire network.

Further, in case the transmission rates of the nodes 106 and 107 are slow in Fig. 6, a new segment consisting of the nodes 105-107 are formed by bridge-connecting the inside of the node 105 as shown in Fig. 7. Such segmentation can prevent the rate of the entire network from being reduced.

Furthermore, in case the node 109 is connected to the node 104 in Fig. 6 so that the distance between the nodes becomes long, a new segment consisting of the nodes 104 and 109 is formed by bridge-connecting the inside of the node 104 as shown in Fig. 7. Such segmentation can prevent the entire network from being influenced by the reduction in the transmission efficiency caused by the long distance transmission.

In this way, it is possible to use the network with the high efficiency by carrying out the suitable segmentation according to the network topology and the traffic.

Explanation will now be made as to how to identify the network topology and the traffic. Each node connected to the IEEE1394 bus can know the transmission rate of each node, the number of the ports and the network topology through the self-identifying process in the bus initialization mode. Further, the transmission delay time from one node to another node can be known by a ping packet or similar means, and the length of the cable therebetween can be calculated from this transmission delay time. That is, the connection relationship of the respective nodes of which the network consists, and the distance between the nodes can be known. Accordingly, the parts described in (2) and (3) mentioned above can be identified.

After the parts described in (2) and (3) are identified in this way, each of the nodes judges whether or not the switching operation is required, and switches its internal connection to be in the bridge connection state according to the judgement result. Alternately, a node having the transmission rate smaller than those of the other nodes or a node connected through a long-distance cable may identify a node to be selected as a bridge, and may instruct the selected node to switch its internal connection to be in the bridge connection state. In these cases, however, since a plurality of nodes have the possibility of selecting as the bridge, it is preferably arranged so that the node to be selected as the bridge broadcasts the fact on the bus and becomes the bridge when there is no objection thereto. Alternately, another arrangement is possible that a node for managing the entire network is previously provided so that the node specifies a node to be selected as the bridge and instructs the specified node to become the bridge.

In order to identify the above part (1), the following methods are used, for example: a method for monitoring the traffic to identify the source and the destination of the packet flowing through the network; a method for inquiring a node which is trying to establish a connection therebetween; and a method for causing a node, which is trying to establish a connection therebetween, to inform of the fact. Further, a node trying to transmit a large quantity of data may identify a node to be used as the bridge according to the network topology, and then may instruct the identified node to switch its internal connection to be in the bridge connection state.

### (b) Avoidance of Bus Restriction

### ① Avoidance of Restriction on Number of Nodes

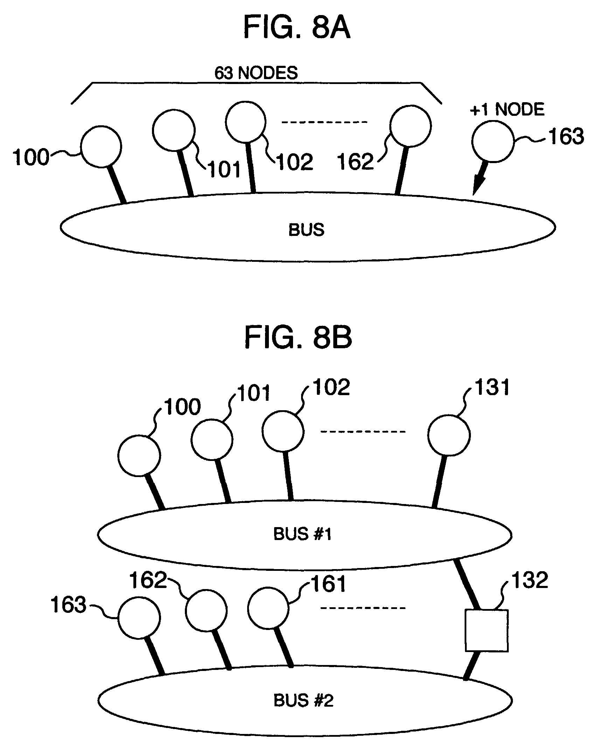

Figs. 8A and 8B are diagrams for explaining how to avoid the restriction on the number of the nodes in a network in which the automatic repeater/bridge changeover devices as shown in Fig. 1 or 3 are used as nodes. Fig. 8A shows a condition that sixty-three nodes 100-162 have been connected to a bus and a 64th node 163 is being connected to the bus, and Fig. 8B shows a condition after the 64th node is connected to the bus. Here, it is assumed that the internal connections of the respective nodes are all in the repeater connection state.

As shown in Fig. 8A, the sixty-three nodes (i.e., the nodes 100-162) are connected to the bus. Under this condition, when the 64th node 163 is connected to the bus, the bus restriction of the IEEE1394 bus is exceeded. In other words, with respect to the IEEE1394 bus, the maximum number of the nodes connectable to a single bus is prescribed as "63". Such additional connection of the 64th node 163 against the bus restriction will cause the operation of the entire bus to be stopped.

In the embodiment of the present invention, when the 64th node 163 is connected to the bus, the bus is divided into two parts to avoid the bus restriction. Fig. 8B shows a case in which the node 132 becomes the bridge and the bus is divided into a bus #1 having the nodes 100-131 connected thereto and a bus #2 having the nodes 133-163 connected thereto, as an example. A method for using the node 132 as the bridge will be explained later.

### ② Avoidance of Restriction on Number of Hops

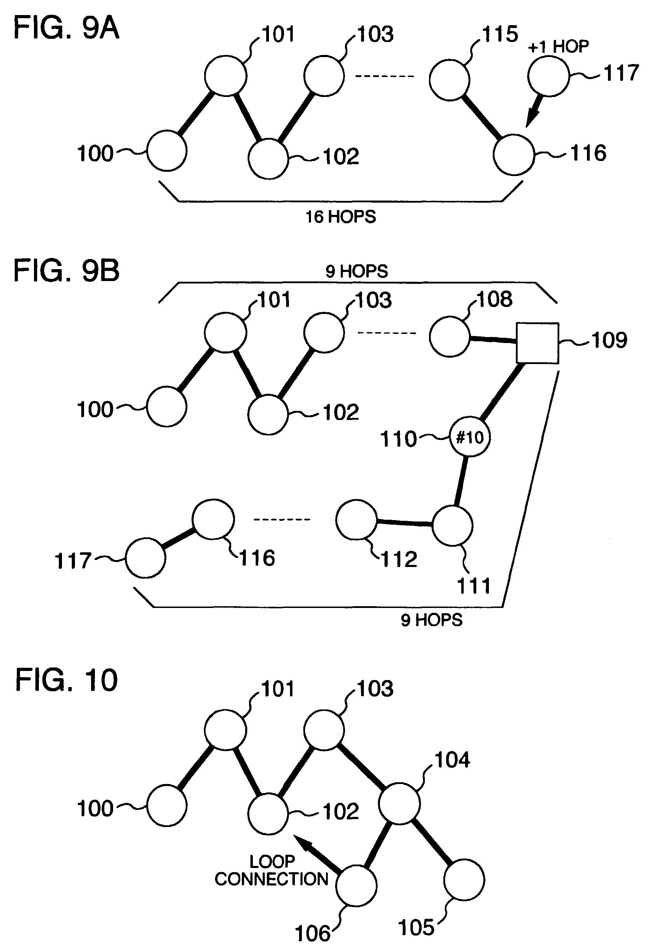

Figs. 9A and 9B are diagrams for explaining how to avoid the restriction on the number of the hops in the network where the automatic repeater/bridge changeover devices as shown in Fig. 1 or 3 are used as the nodes. Fig. 9A shows a condition where the network consists of sixteen hops of the nodes 100-116 and the 17th hop is being connected to the network, and Fig. 9B shows a condition of the network after the 17th hop node is connected thereto. Here, it is assumed that the internal connections of the respective nodes are all in the repeater connection state.

As shown in Fig. 9A, the nodes 100-116 are connected via the IEEE1394 bus cable to form the 16-hop connection configuration. Under this condition, when the node 117 is connected to the node 116, the number of the hops becomes "17", so that it exceeds "16" which is the recommendation value in the IEEE1394 bus. Therefore, in the embodiment of the present invention, when the 17th-hop node 117 is connected to the node 116, the bus is divided into two segments to avoid the restriction on the number of the hops. Fig. 9B shows, as an example, a case where the node 109 is used as the bridge and the bus is divided into a segment of the nodes 100-109 and a segment of the nodes 109-117. How to use the node 109 as the bridge will be explained later.

### (c) Avoidance of Loop Connection

Fig. 10 is a diagram for explaining a loop connection. When the node 106 is connected to the node 102 in the network having the nodes 100-106 as shown in this drawing, the nodes 102, 103, 104 and 106 form a loop. With respect to the IEEE1394 bus, when a loop is established in the network, the function of the network is stopped. Therefore, in the embodiment of the present invention, in the case as shown in Fig. 10, even if the node 102 is connected to the IEEE1394 bus cable, the loop formation is avoided by setting the internal connection of the node 106 to be in the suitable connection state. This will be detailed later.

### (d) How to Avoid Bus Restriction

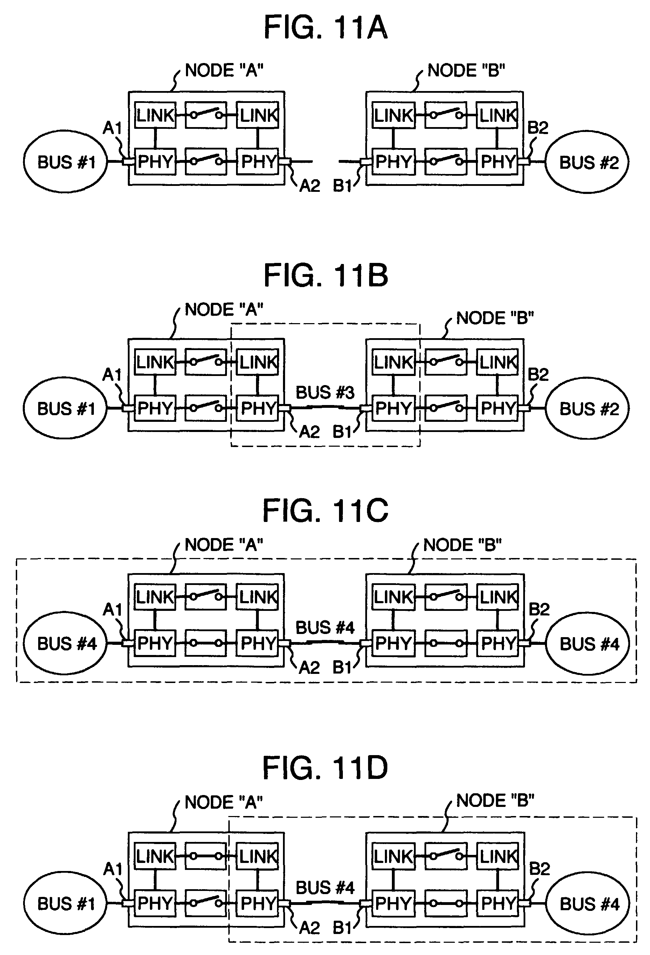

Figs. 11A-11D are diagrams for explaining how to avoid the bus restriction (which is common to the node number and the hop number).

Prior to explanation of how to avoid the bus restriction, the port will be explained. Generally, in the IEEE1394 bus, one corresponding to a connector into which a cable is inserted is logically called "port". One cable is inserted into one "port", and the port is connected in the 1:1 relation to another "port" provided at the opposite side of the cable. Both of the repeater and the bridge have a plurality of "ports".

Meanwhile, there is a so-called "portal" which is divided by the bridge fabric. The "portal" is the conception belonging to the higher upper-level layer than the "port". One "portal" has one or more "ports". One "portal" is connected to one bus. The "ports" within one "portal" act as the repeater. A "portal" is connected to another "portal" by the bridge fabric, if necessary. That is, it is considered that a device called "repeater" has only one "portal", and that a device having a plurality of "portals" connected by the bridge fabrics is the "bridge".

The "port" and the "portal" should be distinguished from each other by nature. This is because in the existing network device, the layer is stationary and things are understood in line with the layer.

In the embodiment, however, it becomes somewhat another story. The principal object of the embodiment is to realize the free changeover between the repeater and the bridge, which means that a network layer to which the device belongs can be freely changed. This means that a layer which should be discussed independently by nature cannot be handled independently in the present embodiment.

In the present embodiment, the "port" and the "portal" have the following relationship. The "port" is an outlet to which a single cable is connected, as being indicated by its original meaning. One or more "ports" form a group which are "repeater-connected", and this group becomes a single "portal". A "portal" and another "portal" are "bridge-connected" each other via the bridge fabric. That is, in the present embodiment, the "port" does not vary, but the "portal" frequently varies depending on its internal connection state.

The following explanation will be made on a device having two ports, and will be directed only to the port. Explanation on the portal will be omitted in order to avoid the complicated explanation, but the state of the portal can be determined referring to the following explanation. More concretely, the state of the portal varies each time the "bridge connection" takes place or disappears.

Fig. 11A shows a condition that a node "A" is connected to a bus #1 and a node "B" is connected to a bus #2. That is, the nodes "A" and "B" are connected to different buses. It goes without saying that the buses #1 and #2 both satisfy their bus restriction. Each of the nodes "A" and "B" is the automatic repeater/bridge changeover device shown in Fig. 1. In the nodes "A" and "B", their upper-level layer processing units and so forth are omitted in the drawing. It is important that a node having a port which is not connected to another node should be previously set to be in the non-connection state. Accordingly, in the nodes "A" and "B", the connection between the ports is in the non-connection state.

Fig. 11B shows a condition immediately after connecting the nodes "A" and "B" in the condition shown in Fig. 11A. Due to this connection, a new bus #3 is established between the ports A2 and B2. The nodes "A" and "B" exchange information about the network topology and so forth via the bus #3, and judge whether or not the connection between the buses #1 and #2 exceeds the bus restriction.

When it is judged that the bus restriction is not exceeded, the ports A1 and A2 of the node "A" are set to be in the repeater connection state and the ports B1 and B2 of the node "B" are set to be in the repeater connection state, as shown in Fig. 11C. As a result, the bus resets are simultaneously generated in the buses #1, #2 and #3 to form a single bus #4 as a whole.

On the other hand, when it is judged that the bus restriction is exceeded, the ports A1 and A2 of the node "A" are set to be in the bridge connection state and the ports B1 and B2 of the node "B" are set to be in the repeater connection state, as shown in Fig. 11D. As a result, the bus resets are simultaneously generated in the buses #1, #2 and #3, so that the buses #2 and #3 form a single bus #4. In this case, the bridge connection state and the repeater connection state may be set to be opposite in the nodes "A" and "B".

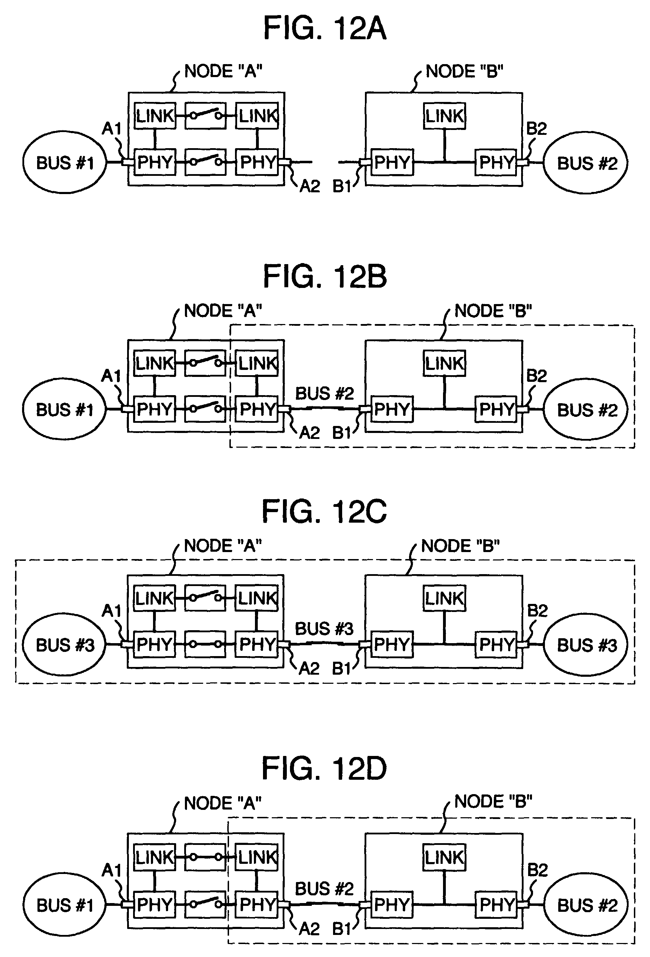

Figs. 12A-12D are other diagrams for explaining how to avoid the bus restriction. In this case, the node "A" is the automatic repeater/bridge changeover device shown in Fig. 1, but the node "B" is the ordinary node (repeater). Other parts are substantially the same as those in Figs. 11A-11D.

Fig. 12B shows a condition immediately after connecting the nodes "A" and "B" in the condition shown in Fig. 12A. This connection generates the bus reset in the bus #2, so that the port A2 also forms the bus #2. The nodes "A" and "B" (or a suitable node on the bus #2) exchange information on the network topology and so forth via the bus #2, and judge whether or not the connection between the buses #1 and #2 exceeds the node number restriction, the hop number restriction and the loop number restriction.

When it is judged that the node number restriction is not exceeded, the ports A1 and A2 of the node "A" are set to be in the repeater connection state, as shown in Fig. 12C. As a result, the bus resets simultaneously generate in the buses #1 and #2, so that a single bus #3 is formed as a whole.

On the other hand, when it is judged that the node number restriction is exceeded, the ports A1 and A2 of the node "A" are set to be in the bridge connection state, as shown in Fig. 12D.

### (e) How to Avoid Loop Connection

A method of avoiding the loop connection will be explained referring to Figs. 11A-11D and 12A-12D.

Fig. 11A shows a condition in which the node "A" is connected to the bus #1 and the node "B" is connected to the bus #2. In other words, the nodes "A" and "B" are connected to the different buses, so that as a matter of course, any loop is not formed. Each of the nodes "A" and "B" is the automatic repeater/bridge changeover device shown in Fig. 1. It is important that a node having a port which is not connected to another node should be previously set to be in the non-connection state. Accordingly, in the nodes "A" and "B", the ports are set to be in the non-connection state.

Fig. 11B shows a condition immediately after connecting the nodes "A" and "B" in the condition shown in Fig. 11A. This connection forms a new bus #3 between the ports A2 and B2. The nodes "A" and "B" exchange information via the bus #3 to judge whether the buses #1 and #2 are the same or different. This judging method will be explained later.

When it is judged that the both buses are the same, the nodes wait for as they are. When it is judged that the both buses are different or when the both buses become different after the wait, the ports A1 and A2 of the node "A" are set to be in the repeater connection state or in the bridge connection state, and the ports B1 and B2 of the node "B" are set to be in the repeater connection state or in the bridge connection state. When they are is set to be in the repeater connection state, the bus resets are simultaneously generated in the buses #1, #2 and #3, so that a bus #4 is formed as a whole as shown in Fig. 11C. At this time, it is determined depending on the situations whether the insides of the nodes "A" and "B" are set to be in the bridge connection state or in the repeater connection state.

Fig. 12A shows a condition in which the node "A" is connected to the bus #1 and the node "B" is connected to the bus #2. In other words, the nodes "A" and "B" are connected to the different buses, so that as a matter of course, any loop is not formed. In this case, the node "A" is the automatic repeater/bridge changeover device shown in Fig. 1, but the node "B" is the ordinary node (repeater). It is important that the inside of the node "A" should be previously set to be in the non-connection state.

Fig. 12B shows a condition immediately after connecting the nodes "A" and "B" in the condition shown in Fig. 12A. This connection generates the bus reset in the bus #2, so that the port A2 also forms the bus #2. The nodes "A" and "B" (or a suitable node on the bus #2) exchange information via the bus #2 to judge whether the buses #1 and #2 are the same or different. The judging method will be explained later.

When it is judged that the both buses are the same, the nodes wait for as they are. When it is judged that the both buses are different or when the both buses become different after the wait, the ports A1 and A2 of the node "A" are set to be in the repeater connection state or in the bridge connection state. When they are set to be in the repeater connection state, the bus resets simultaneously generate in the buses #1, #2 and #3, so that a single bus #3 is formed as a whole as shown in Fig. 12C. At this time, it is determined depending on the situations whether the insides of the nodes "A" and "B" are set to be in the bridge connection state or in the repeater connection state.

Next explanation will be made as to how to judge whether the buses #1 and #2 are the same or different in the condition of Fig. 11B or 12B.

The node "A" acquires a bus ID of the bus #2 via the bus #3, and then compares the acquired bus ID with a bus ID of the bus #1. If the both bus IDs are different, then the buses #1 and #2 are different. If the both bus IDs are the same, then the buses #1 and #2 may be the same.

The node "A" acquires a node ID of the port B2. If there is the node ID of the port B2 on the bus #1, the buses #1 and #2 may be the same.

The node "A" acquires information on the topology of the bus #2, and then compares the acquired topology of the bus #2 with the topology of the bus #1. If the both topologies are different, then the buses #1 and #2 are different. On the other hand, if the both topologies are the same, then the buses #1 and #2 may be the same.

It can be judged by the aforementioned three methods that the two buses are different, but cannot be judged that the two buses are the same. Consequently, one or more of six methods (i) to (vi) below are used to judge whether or not the two buses are the same.
(i) When the bus IDs of the buses #1 and #2 are the same, the packet are transmitted from the port A1 to the address which is the same as the port B2. When the packet can be received at the port B2, the buses #1 and #2 are the same.
(ii) When the bus IDs of the buses #1 and #2 are the same, an identification frame is broadcast from the port A1 to the bus #1. When the identification frame can be received at the port B2, the buses #1 and #2 are the same.
(iii) The frames simultaneously received at the ports A1 and B2 are compared. When the same frame is received at the ports, the buses #1 and #2 are the same.
(iv) A unique ID of the node "B" is inquired. A unique ID is inquired from the port A1 to the address which is the same as the port B2. When the both unique Ids are the same, the buses #1 and #2 are the same.
(v) A server for managing the entire network is installed, and inquiry is carried out to the server. When the server receives inquiries simultaneously from the ports A1 and B2, the buses #1 and #2 are the same.
(vi) A suitable node (for example, the cycle master) is previously determined as the confirmation target. In case the cycle master is the confirmation target, it is examined whether or not the cycle master of the bus #1 is the same as the cycle master of the bus #2. When the both cycle masters are the same, the buses #1 and #2 are the same.

### (f) Redundancy

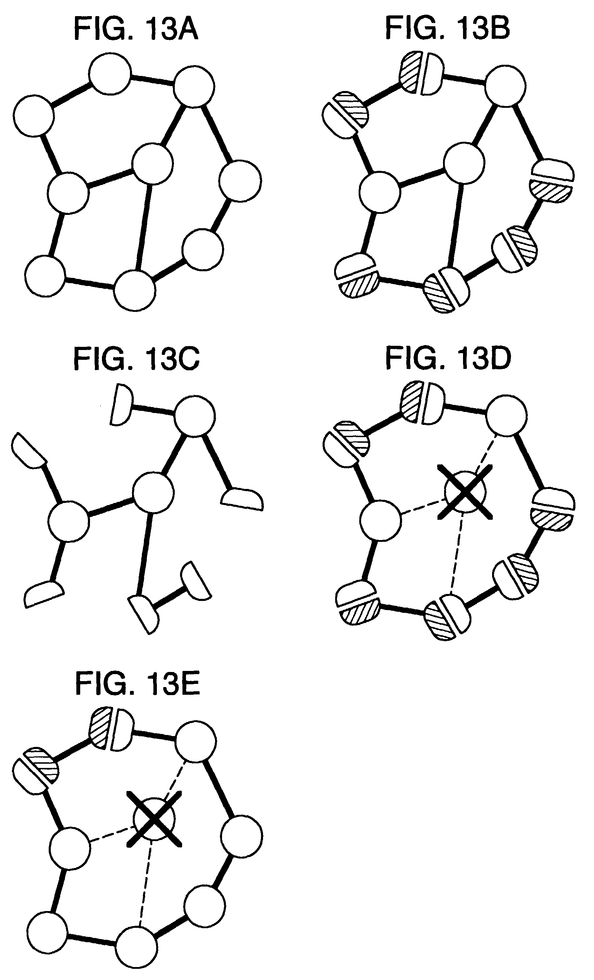

Figs. 13A-13E are diagrams for explaining the redundancy. In Figs. 13A-13E, mark "○" denotes a node which is the automatic repeater/bridge changeover device shown in Fig. 1 or 3. Fig. 13A means that each of the nodes is physically connected via the IEEE1394 bus. In Fig. 13B, a node denoted by halves one of which is shaded means that the inside thereof is set to be in the non-connection state. Accordingly, in a network shown in Fig. 13A, loops are physically formed, but no loop is electrically formed because the network has a connection configuration shown in Fig. 13C.

It is now assumed that, a failure takes place in a central node and the central node is electrically isolated from the other nodes, as shown in Fig. 13D. Under this condition, the network is electrically divided into three parts as shown in Fig. 13D, so that it is impossible to communicate with each other.

Accordingly, in the embodiment of the present invention, the nodes which are set to be in the non-connection state are switched to be in the repeater connection state to put the network in such a condition shown in Fig. 13E, for example. Thereby, all of the nodes are electrically connected, so that it is possible to communicate with each other. At this time, however, when three nodes shown by the shaded halves in Fig. 13 are simultaneously connected, a loop is formed. In order to avoid this, the switching times when these nodes are changed to be in the repeater connection state are shifted. The switching-time shifting methods include a method for utilizing the random numbers, a method for previously determining the order of the shifting times, and a method for determining the priority order thereof based on the node IDs. When the switching times of the three nodes are shifted, the connection of the last-connected node can be avoided because the aforementioned loop connection avoiding method is carried out. Further, it may be previously determined which nodes are connected and which nodes are not connected when the failure takes place in the node. This determination can be realized using the topology information acquired in the self-identification process.

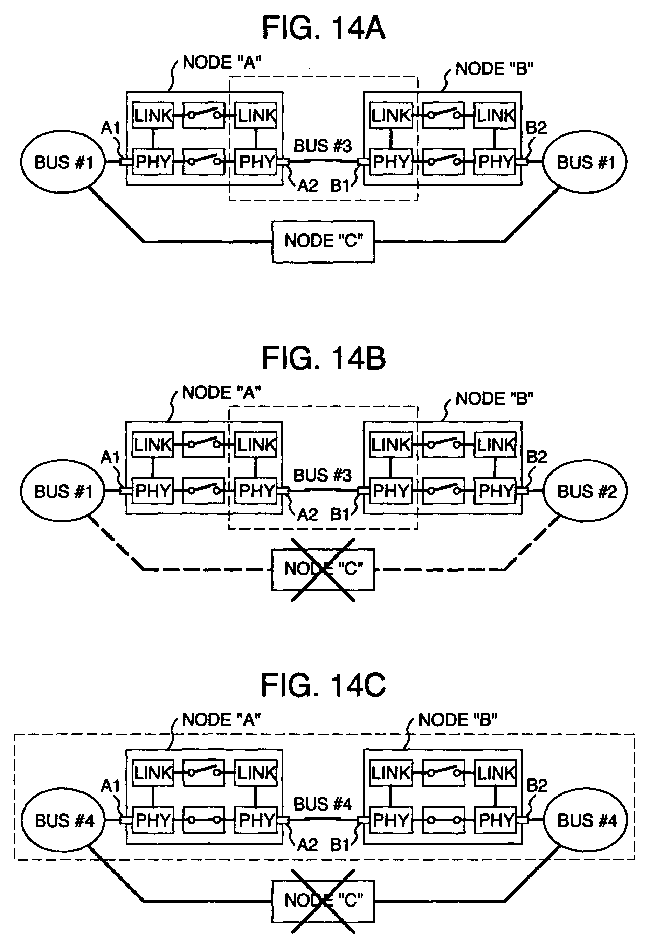

Figs. 14A-14C are diagrams showing exemplary operations of the network having the redundancy when the failure takes place in the node.

In Fig. 14A, the port A1 of the node "A" and the port B2 of the node "B" are connected to the bus #1, and the two ports of the node "C" are connected to the bus #1. Further, the nodes "A" and "B" are physically connected each other, but the insides thereof are set to be in the non-connection state.

Under this condition, when a failure occurs in the node "C", the bus reset takes place, so that the bus to which the port A1 is connected becomes the bus #1 and the bus to which the port B2 is connected becomes the bus #2, as shown in Fig. 14B. The nodes "A" and "B" exchange information through the bus #3 to judge whether the buses #1 and #2 are the same or different. This judging method has been already explained above.

When it is judged that the buses #1 and #2 are the same, the nodes waits for as they are. When it is judged that the buses #1 and #2 are different, the internal connection states of the nodes "A" and "B" are switched to the repeater connection state as shown in Fig. 14C. Thereby, all the nodes are connected to the same bus #4, so that communication can be realized among all the nodes as in the case of the failure occurrence.

As explained in the foregoing, according to the present invention, it is possible to switch the connections between the buses to be in the repeater connection state or in the non-connection state. Therefore, there can be provided the bus connection changeover device having the excellent effect that the node can function as the repeater or the leaf node when it is connected to the bus.

Further, according to the present invention, it is possible to switch the connections between the buses to be in the repeater connection state or in the bridge connection state. Therefore, there can be provided the bus connection changeover device having the excellent effect that the node can function as the repeater or the bridge when it is connected to the bus.

Furthermore, according to the present invention, it is possible o switch the connections between the buses to be in the repeater connection state, the bridge connection state or the non-connection state. Therefore, there can be provided the bus connection changeover device having the excellent effect that the node can function as the repeater, the bridge or the leaf node when it is connected to the bus.

According to the present invention, the network topology and traffic of the bus are monitored to perform the above-mentioned switching operation according to the monitoring result. Therefore, there can be provided the bus connection changeover device having the excellent effect that the device can be automatically changed to be the repeater, the bridge or the leaf node by judging the conditions including the transmission delay on the network, the traffic, the connection state, the node port state and the network topology.

## Claims

1. A bus connection changeover device (1) comprising:
a plurality of bus connection units (P1, P2); and
switching means (7, 8) for switching said bus connection units to be in a repeater connection state or in a non-connection state.

2. A bus connection changeover device as set forth in claim 1, wherein said switching means monitors a network topology and traffic of a bus when said bus connection units are connected to said bus, and then performs said switching operation according to a monitoring situation.

3. A bus connection changeover device as set forth in claim 1, wherein said switching means switches said bus connection units to be in said non-connection state when at least one of said bus connection units is not connected to a bus.

4. A bus connection changeover device as set forth in claim 3, wherein
when one bus connection unit is newly connected to said bus, said switching means examines a state of said bus to be connected;
when it is judged that an already-connected bus which has already connected to another bus connection unit other than said one bus connection unit is the same as said bus, said switching means keeps said bus connection units to be in said non-connection state; and
when it is judged that said already-connected bus is not the same as said bus, said switching means switches said bus connection units to be in said repeater connection state.

5. A bus connection changeover device (1) comprising:
a plurality of bus connection units (P1, P2); and
switching means (7, 8) for switching said bus connection units to be in a repeater connection state or in a bridge connection state.

6. A bus connection changeover device as set forth in claim 5, wherein said switching means monitors a network topology and traffic of a bus when said bus connection units are connected to said bus, and then performs said switching operation according to a monitoring situation.

7. A bus connection changeover device as set forth in claim 5, wherein
when one bus connection unit are newly connected to said bus, said switching means examines a state of said bus to be connected;
when it is judged that a bus restriction of said bus is exceeded, said switching means switches said bus connection units to be in said bridge connection state; and
when it is judged that the bus restriction of said bus is not exceeded, said switching means switches said bus connection units to be in said repeater connection state.

8. A bus connection changeover device (1) comprising:
a plurality of bus connection units (P1, P2); and
switching means (7, 8) for switching said bus connection units to be in a repeater connection state, in a bridge connection state or in a non-connection state.

9. A bus connection changeover device as set forth in claim 8, wherein said switching means monitors a network topology and traffic of a bus when said bus connection units are connected to said bus, and then performs said switching operation according to a monitoring situation.

10. A bus connection changeover device as set forth in claim 8, wherein said switching means switches said bus connection units to be in said non-connection state when at least one of said plurality of bus connection units is not connected to a bus.

11. A bus connection changeover device as set forth in claim 10, wherein
when one bus connection unit is newly connected to said bus, said switching means examines a state of said bus to be connected;
when it is judged that a bus restriction of said bus is exceeded, said switching means switches said bus connection units to be in said bridge connection state; and
when it is judged that the bus restriction of said bus is not exceeded, said switching means switches said bus connection units to be in said repeater connection state.

12. A bus connection changeover device as set forth in claim 10, wherein
when one bus connection unit is connected to said bus, said switching means examines a state of said bus to be connected;
when it is judged that an already-connected bus which has already connected to another bus connection unit other than said one bus connection unit is the same as said bus, said switching means keeps said bus connection units to be in said non-connection state; and
when it is judged that said already-connected bus is not the same as said bus, said switching means switches said bus connection units to be in said repeater connection state or in said bridge connection state.

13. A network system comprising said bus connection changeover device (1) as set forth in claim 2, 6 or 9.

14. A network system as set forth in claim 13, wherein said bus connection changeover device sets said bus connection units to be in said bridge connection state so that a part in which a relatively larger transmission is performed forms another bus.

15. A network system as set forth in claim 13, wherein said bus connection changeover device sets said bus connection units to be in said bridge connection state so that a part having a relatively lower data transmission rate forms another bus.

16. A network system as set forth in claim 13, wherein said bus connection changeover device sets said bus connection units to be in said bridge connection state so that a part connected at a long distance forms another bus.

17. A bus connection changeover device as set forth in claim 3, wherein
said bus connection changeover device is connected to another first bus connection changeover device (1') or another second bus connection changeover device (1''), said first bus connection changeover device (1') including a plurality of first bus connection units (P1', P2') and first changeover means (7') for switching said first bus connection units to be in said repeater connection state or in said non-connection state, and said second bus connection changeover device (1'') including a plurality of second bus connection units (P1'', P2'') and second changeover means (7'') for switching said second bus connection units to be in said repeater connection state, in said bridge connection state or in said non-connection state;
said changeover means (7) of said bus connection changeover device (1), when one of its own bus connection units is newly connected to said bus,
examines a state of said bus to be connected;
issues a command to switch said first or second bus connection units of said first or second bus connection changeover device which is present at an optimum position based on network topology and traffic of said bus, to be in said non-connection state, and switches said bus connection units thereof to be in said repeater connection state, when it is judged that a bus connected to its own bus connection units other than said its own one bus connection unit is the same as said bus to be connected; and
switches its own bus connection units to be in said repeater connection state when it is judged that the both buses are not the same.

18. A bus connection changeover device as set forth in claim 10, wherein
said bus connection changeover device (1) is connected to another first bus connection changeover device (1') or another second bus connection changeover device (1''), said first bus connection changeover device (1') including a plurality of first bus connection units (P1', P2') and first changeover means (7') for switching said first bus connection units to be in said repeater connection state or in said non-connection state, and said second bus connection changeover device (1'') including a plurality of second bus connection units (P1'', P2'') and second changeover means (7'') for switching said second bus connection units to be in said repeater connection state, in said bridge connection state or in said non-connection state;
said changeover means of said bus connection changeover device, when one of its own bus connection units is newly connected to said bus,
examines a state of said bus to be connected;
issues a command to switch said first or second bus connection units of said first or second bus connection changeover device which is present at an optimum position based on network topology and traffic of said bus, to be in said non-connection state, and switches said bus connection units thereof to be in said repeater connection state or in said bridge connection state, when it is judged that a bus connected to its own bus connection units other than said its own one bus connection unit is the same as said bus to be connected; and
switches its own bus connection units to be in said repeater connection state when it is judged that the both buses are not the same.

19. A bus connection changeover device as set forth in claim 4, wherein
said bus connection changeover device (1) is connected to another first bus connection changeover device (1') or another second bus connection changeover device (1''), said first bus connection changeover device (1') including a plurality of first bus connection units (P1', P2') and first changeover means (7') for switching said first bus connection units to be in said repeater connection state or in said non-connection state, and said second bus connection changeover device (1'') including a plurality of second bus connection units (P1'', P2'') and second changeover means (7'') for switching said second bus connection units to be in said repeater connection state, in said bridge connection state or in said non-connection state;
said changeover means of said bus connection changeover device switches the connection between said first or second bus connection units of said first or second bus connection changeover device to be in said repeater connection state when it is judged that a bus connected to its own bus connection units other than said its own one bus connection unit is the same as said bus to be connected to keep said first or second bus connection units of said first or second bus connection changeover device to be in said non-connection state and then it is judged that that the both buses are not same.

20. A bus connection changeover device as set forth in claim 12, wherein
said bus connection changeover device (1) is connected to another first bus connection changeover device (1') or another second bus connection changeover device (1''), said first bus connection changeover device (1') including a plurality of first bus connection units (P1', P2') and first changeover means (7') for switching said first bus connection units to be in said repeater connection state or in said non-connection state, and said second bus connection changeover device (1'') including a plurality of second bus connection units (P1'', P2'') and second changeover means (7'') for switching said second bus connection units to be in said repeater connection state, in said bridge connection state or in said non-connection state;
said changeover means of said bus connection changeover device switches the connection between said first or second bus connection units of said first or second bus connection changeover device to be in said repeater connection state or in said bridge connection state when it is judged that a bus connected to its own bus connection units other than said its own one bus connection unit is the same as said bus to be connected to keep said first or second bus connection units of said first or second bus connection changeover device to be in said non-connection state and then it is judged that that the both buses are not same.

21. A node used in a network system comprising a plurality of said bus connection changeover devices set forth in claim 1, 5 or 8, wherein
said node monitors topology and traffic of said network system, and issues a switching command to said bus connection changeover device according to a monitored result.

22. A network connection changeover method comprising the steps of:
in a condition in which one of said bus connection units of said bus connection changeover device set forth in claim 3 is connected to another bus of a network system having said node set forth in claim 21, when another bus connection unit of said bus changeover device is connected to said bus,
examining a state of said bus to be connected;
when it is judged that said bus connected to said one bus connection unit is the same as said bus, said bus connection changeover device set forth in claim 3 informing said node set forth in claim 21 of a judgement result; and
when it is judged that the both buses are not the same, switching said bus connection units of said bus connection changeover device set forth in claim 3 to be in said repeater connection state.

23. A network connection changeover method comprising the steps of:
in a condition in which one of said bus connection units of said bus connection changeover device set forth in claim 10 is connected to another bus of a network system having said node set forth in claim 21, when another bus connection unit of said bus changeover device is connected to said bus,
examining a state of said bus to be connected;
when it is judged that said bus connected to said one bus connection unit is the same as said bus, said bus connection changeover device set forth in claim 10 informing said node set forth in claim 21 of a judgement result; and
when it is judged that the both buses are not the same, switching said bus connection units of said bus connection changeover device set forth in claim 10 to be in said repeater connection state or in said bridge connection state.

24. A network connection changeover method comprising the steps of:
in a condition in which one of said bus connection units of said bus connection changeover device set forth in claim 3 is connected to another bus of a network system having said node set forth in claim 21, when another bus connection unit of said bus changeover device is connected to said bus,
examining a state of said bus to be connected;
when it is judged that said bus connected to said one bus connection unit is the same as said bus, said bus connection changeover device set forth in claim 3 informing said node set forth in claim 21 of a judgement result; and
when it is judged that the both buses are not the same thereafter, switching said bus connection units of said bus connection changeover device set forth in claim 3 to be in said repeater connection state .

25. A network connection changeover method comprising the steps of:
in a condition in which one of said bus connection units of said bus connection changeover device set forth in claim 10 is connected to another bus of a network system having said node set forth in claim 21, when another bus connection unit of said bus changeover device is connected to said bus,
examining a state of said bus to be connected;
when it is judged that said bus connected to said one bus connection unit is the same as said bus, said bus connection changeover device set forth in claim 10 informing said node set forth in claim 21 of a judgement result; and
when it is judged that the both buses are not the same thereafter, switching said bus connection units of said bus connection changeover device set forth in claim 10 to be in said repeater connection state or in said bridge connection state.

26. A network system comprising:
said bus connection changeover devices set forth in claim 3, 4, 10 or 20; and
said node set forth in claim 21, wherein
a loop is physically formed between said bus connection units so that said network has redundancy.
